# EUROPEAN PATENT APPLICATION

(11) **EP 1 041 744 A2**
(43) Date of publication of application: **04.10.2000**
(21) Application number: 00302501.2
(22) Date of filing: 27.03.2000
(51) Int. Cl.: H04B 7/26

(54) **TDMA/TDD data communication completing system**

(30) Priority: 31.03.1999 JP 9307599
(71) Applicant: ALPS ELECTRIC CO., LTD., Ota-ku Tokyo 145 (JP)
(72) Inventor: Izumi, Hideo, Ota-ku, Tokyo (JP); Forde, Brian, c/o Silicon & Software Systems, Dublin 18 (IE); Connolly, Bronagh, c/o Silicon & Software Systems, Dublin 18 (IE); Cusack, Martin, c/o Silicon & Software Systems, Dublin 18 (IE)
(74) Representative: Kensett, John Hinton

(57) **Abstract**

The present invention provides a TDMA/TDD data communication completing system capable of swiftly setting the completion of data communication executed between a master device and a slave device, when the data communication between them is finished. The TDMA/TDD data communication completing system completes data communication between a master device and a slave device, and the master device and the slave device each include a data processing unit (1) that forms transmission serial data and processes reception serial data, a transmitting and receiving slot control unit (3) that sets time allocation of a transmitting and receiving slot, an encoding unit (4) that encodes the transmission serial data with the slot controlled and forms transmission coded data according to the TDMA/TDD system, a transmitting unit (5) that transmits on RF signal to partner equipment, a receiving unit (6) that receives the RF signal transmitted by the partner equipment and converts it into a base band signal, a decoding unit (7) that decodes the base band signal into reception coded data, and a control unit (8) that totally controls the units. The control units of the master device and the slave device executing the data communication each transmit the DSR signal and DTR signal outputted by the processing unit to the partner equipment as the coded data, and at the timing of completing the data communication, turn into the OFF state the DSR signal and the DTR signal being the converted coded data under transmission.

## Description

The present invention relates to a TDMA (Time Division Multiple Access)/TDD (Time Division Duplex) data communication completing system, particularly to a TDMA/TDD data communication completing system that transmits a data set ready (DSR) signal and a data terminal ready (DTR) signal being converted coded data, between a master device and a slave device executing a data communication, and completes the data communication between them by turning these signals into the OFF state.

As a multiplex communication system between multiple users, using the TDMA system, the PHS (personal Handyphone System) is generally used in Japan. As another system comparable to this PHS, the DECT (Digital Enhanced Cordless Telecommunication) system is widely used in Europe, Africa, the Middle and Near East, South America, Oceania, China, India, etc.

This DECT system is established by the ETSI (European Telecommunication Standard Institute) in Europe, being a standard Radio Communication System common to the European countries, which allows transmission of data in addition to the voice signals. The frequency bands used are 1.88 to 1.90 GHz in Europe, 1.91 to 1.93 GHz in South America, and 1.90 to 1.92 GHz in China, in which 10 channels are allocated to each frequency band, and 12 slots each for the transmitting and receiving are allocated to one channel to perform the time division multiplex transmission.

The DECT system adopts the RS-232C/UART (Universal Asynchronous Receiver Transmitter) (IEEE conformable) serial interface as the interface for each of transmitting and receiving equipment (master device and slave device). And when executing the data communication (conversation), each unit of the transmitting and receiving equipment converts transmission serial data (conversation information) into transmission coded data specified by the DECT system, transmits the coded data to partner transmitting and receiving equipment in the form of an RF (Radio Frequency) signal at a predetermined transmission slot time, and when receiving an RF signal from the partner transmitting and receiving equipment at a predetermined reception slot time, decodes the RF signal to attain reception serial data (speech information).

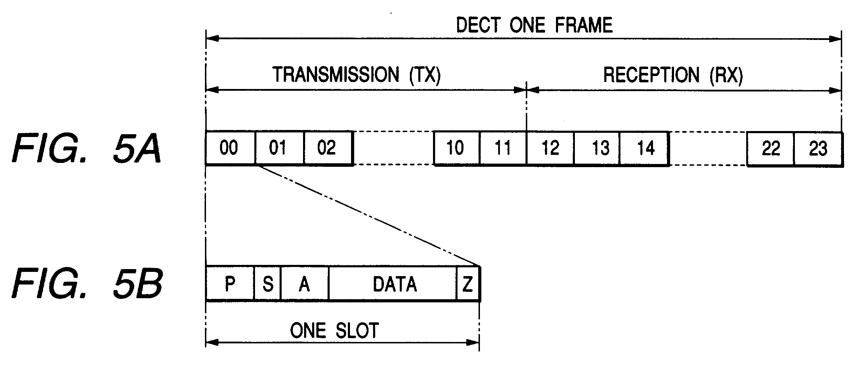

Fig. 5A and Fig. 5B are illustrations to explain the coded data format transmitted and received in the DECT system, which shows the data format of one frame in one channel.

As shown in Fig. 5A, one frame of the coded data according to the DECT system includes 12 slots from slot 00 through slot 11 assigned to the transmission (TX), and 12 slots from slot 12 through slot 23 assigned to the reception (RX). The time assigned to the transmission (TX) and the reception (RX) each is 5 ms.

And, as shown in Fig. 5B, the data configuration of each slot includes a synchronous preamble P to set an idle time for synchronization, a synchronous word S to indicate the DECT system coded data, an ID code A made up of an identification code for identifying a communication partner and the other control codes, DATA composed of communication data, and an error bit Z for the parity check.

To start data communication between a master device and a slave device in the DECT system, first the master device requesting data transmission turns a transmission request (RTS) signal into the ON state, next the slave device receiving the signal turns a link connection (CD) signal into the ON state, next the master device receiving the signal turns the link connection (CD) signal into the ON state and at the same time turns a communication ready (CTS/DTR) signal into the ON state, and subsequently the slave device receiving these signals turns the communication ready (CTS/DTR) signal into the ON state, thereby starting the data communication between them.

On the other hand, to complete the data communication being executed between the master device and the slave device, when detecting that one unit of transmitting and receiving equipment transmitting the data, for example, the slave device does not transmit the data more than a predetermined time (idle time), the master device sets the completion of the data communication, or resets the slave device, which is the normal execution in this case.

In the known DECT system, to complete data communication being executed between the master device and the slave device, one of the two sets the completion of the data communication by the detection of the idle time, as mentioned above. In this case, if the data transmission quantity during the data communication between them is always constant, the response time from when the data to be transmitted becomes null until when the completion of the data communication is set will become virtually constant, and accordingly the completion of the data communication can effectively be set. However, if the data transmission quantity during the data communication between them is not constant, the time (link time) from when the data to be transmitted becomes null until when the completion of the data communication is set will be wasted, and to that extent, the start time of the next data communication is unavoidably delayed.

To reduce the above link time, the system may be designed to reset the transmitting and receiving equipment; however if the transmitting and receiving equipment is reset, it will be started to operate afresh from the initial state, and the time until the specific operation state is unavoidably wasted.

The present invention has been made in view of these technical background, and it is an object of the present invention to provide a TDMA/TDD data communication completing system capable of setting the completion of a data communication between two units of transmitting and receiving equipment in a short time on finishing the data communication.

In order to accomplish the object, in the TDMA/TDD data communication completing system according to the present invention, a master device and a slave device each include a data processing unit, a transmitting and receiving slot control unit, an encoding unit, a transmitting unit, a receiving unit, a decoding unit, and a control unit, in which the control units of the master device and the slave device executing data communication include means that, when converting a data set ready (DSR) signal and a data terminal ready (DTR) signal outputted from the data processing unit into coded data specified by the TDMA/TDD system to transmit it to the partner equipment, and completing the data communication, turns into the OFF state the data set ready (DSR) signal and the data terminal ready (DTR) signal being the converted coded data under transmission.

According to the foregoing means, in the data communication being executed between the master device and the slave device, when the data to be transmitted becomes null or certain equipment detects that the other equipment does not normally receive data due to a bad condition of the data communication, the equipment whose transmission data becomes null or the equipment detecting that the data is not normally received sets the completion of the data communication by turning into the OFF state the data set ready (DSR) signal or the data terminal ready (DTR) signal being the converted coded data under transmission, whereby the completion of the data communication can be set swiftly without exceeding the link time.

In accordance with one aspect of the present invention, the TDMA/TDD data communication completing system completes data communication between a master device and a slave device, and the master device and the slave device each include a data processing unit that forms transmission serial data and processes reception serial data, a transmitting and receiving slot control unit that sets time allocation of a transmitting and receiving slot, an encoding unit that encodes the slot-controlled transmission serial data and forms a transmission coded data according to the TDMA/TDD system, a transmitting unit that transmits the transmission coded data to partner equipment in the form of an RF signal, a receiving unit that receives the RF signal transmitted by the partner equipment and converts it into a base band signal, a decoding unit that decodes the base band signal into reception coded data, and a control unit that totally controls the units, in which the control units of the master device and the slave device executing the data communication, when converting a data set ready (DSR) signal and a data terminal ready (DTR) signal outputted from the data processing unit into coded data specified by the TDMA/TDD system to transmit it to the partner equipment, and completing the data communication, turn into the OFF state the data set ready (DSR) signal and the data terminal ready (DTR) signal being converted coded data under transmission.

Preferably, the TDMA/TDD data communication completing system utilizes the data set ready (DSR) signal and the data terminal ready (DTR) signal set in the A field of the slot 1 data in the DECT system.

According to these embodiments of the present invention, in the data communication being executed between the master device and the slave device, the data set ready (DSR) signal or the data terminal ready (DTR) signal being converted into the coded data is made to be transmitted together with the transmission data, and when the transmission data from a transmitter side becomes null, or when the data communication is in a bad condition for any reason and the transmission data from a transmitter side is detected not to be normally received by a receiver side, the equipment whose transmission data becomes null or the equipment detecting that the reception of data is interrupted turns into the OFF state the data set ready (DSR) signal or the data terminal ready (DTR) signal being the converted coded data under transmission to thereby set the completion of the data communication. Therefore, after the data communication is completed, or after the data communication is interrupted, the data communication can be completed swiftly without exceeding the link time.

Embodiments of the present invention will now be described, by way of example only, with reference to the accompanying drawings, in which:
Fig. 1 is a block diagram illustrating one embodiment of data transmitting and receiving equipment that implements the TDMA/TDD data communication completing system related to the present invention;
Fig. 2 is a chart illustrating a state of the signals exchanged before and after the data communication between the master device and the slave device in the transmitting and receiving equipment of the embodiment;
Fig. 3 is a chart illustrating another state of the signals exchanged before and after the data communication between the master device and the slave device in the transmitting and receiving equipment of the embodiment;
Fig. 4 is a chart illustrating another state of the signals exchanged before and after the data communication between the master device and the slave device in the transmitting and receiving equipment of the embodiment; and
Fig. 5 is an illustration of a transmission coded data format transmitted and received in the DECT system.

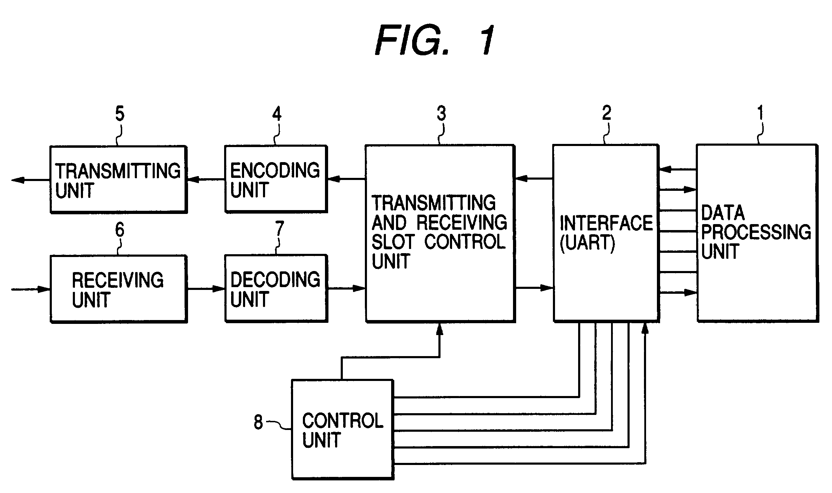

As shown in Fig. 1, the transmitting and receiving equipment of this embodiment includes a data processing unit 1 being data terminal equipment (DTE) that forms transmission serial data and processes reception serial data, a UART (Universal Asynchronous Receiver Transmitter) interface 2 connected to the data processing unit 1, that exchanges the serial data with the data processing unit 1, a transmitting and receiving slot control unit 3 that sets time allocation of a transmitting and receiving slot, an encoding unit 4 that encodes the transmission serial data and forms transmission coded data according to the TDMA/TDD system, a transmitting unit 5 that transmits the transmission coded data to partner equipment in the form of an RF signal, a receiving unit 6 that receives the RF signal transmitted by the partner equipment and converts it into a base band signal, a decoding unit 7 that decodes the base band signal into reception coded data, and a control unit 8 that totally controls the data module. The data module here includes the units except for the data processing unit 1 and the UART interface 2.

And, the data processing unit 1 and the UART interface 2 are mutually connected as shown in Fig. 1. The data output terminal and the data input terminal of the UART interface 2 are connected to the transmission data input terminal and the reception data output terminal, respectively, of the transmitting and receiving slot control unit 3. The transmission serial data output terminal of the transmitting and receiving slot control unit 3 is connected to the transmission serial data input terminal of the encoding unit 4, and the reception serial data input terminal thereof is connected to the reception serial data output terminal of the decoding unit 7. The transmission coded data input terminal of the transmitting unit 5 is connected to the transmission coded data output terminal of the encoding unit 4, and the RF signal output terminal is connected to a transmitting and receiving antenna not illustrated. The RF signal input terminal of the receiving unit 6 is connected to the transmitting and receiving antenna, and the base band signal output terminal thereof is connected to the base band signal input terminal of the decoding unit 7. The control unit 8 is connected to each of the control terminals of the UART interface 2, transmitting and receiving slot control unit 3, encoding unit 4, and decoding unit 7.

The operation of the transmitting and receiving equipment of this embodiment with the above configuration will be described.

When the UART interface 2 outputs transmission serial data formed by the data processing unit 1 and the UART interface 2, the transmitting and receiving slot control unit 3 assigns the transmission serial data to one of the 12 slots from slot 00 through slot 11 for the transmission (TX) slot, for example, slot 00, as shown in Fig. 5A, and supplies the transmission serial data to the encoding unit 4 so that the data can be transmitted within a time assigned to slot 00. The encoding unit 4 encodes the supplied transmission serial data into transmission coded data according to the TDMA/TDD system, and supplies the transmission coded data to the transmitting unit 5. At this stage, the encoding unit 4 incorporates the data set ready (DSR) signal and the data terminal ready (DTR) signal outputted from the data processing unit 1 into the A field of the slot 1 of the transmission coded data, and encodes the data combined with these signals into transmission coded data including the DSR and DTR signals encoded. The transmitting unit 5 converts the transmission coded data thus formed by the encoding unit 4 into an RF signal, applies the frequency conversion to the RF signal to form a transmission RF signal, amplifies the transmission RF signal to a specific level, and supplies the result to the transmitting and receiving antenna not illustrated, thus transmitting it toward the partner equipment.

When the transmitting and receiving antenna receives an RF signal transmitted from the partner transmitting and receiving equipment during a time assigned to one of the 12 slots from slot 12 through slot 23 for the reception (RX) slot, for example, slot 12, as shown in Fig. 5A, the receiving unit 6 applies the frequency conversion to the RF signal received by the transmitting and receiving antenna, converts the frequency-converted RF signal into a base band signal, and supplies the base band signal thus attained to the decoding unit 7. The decoding unit 7 decodes this base band signal into reception coded data, and supplies the decoded result to the transmitting and receiving slot control unit 3 as the reception coded data of the slot 1 data as shown in Fig. 5. Then, the transmitting and receiving slot control unit 3 converts the supplied reception coded data into the reception serial data, and supplies the converted reception serial data to the data processing unit 1 through the UART interface 2. Then, the data processing unit 1, exchanging data with the UART interface 2, applies the specific processing to the supplied reception serial data.

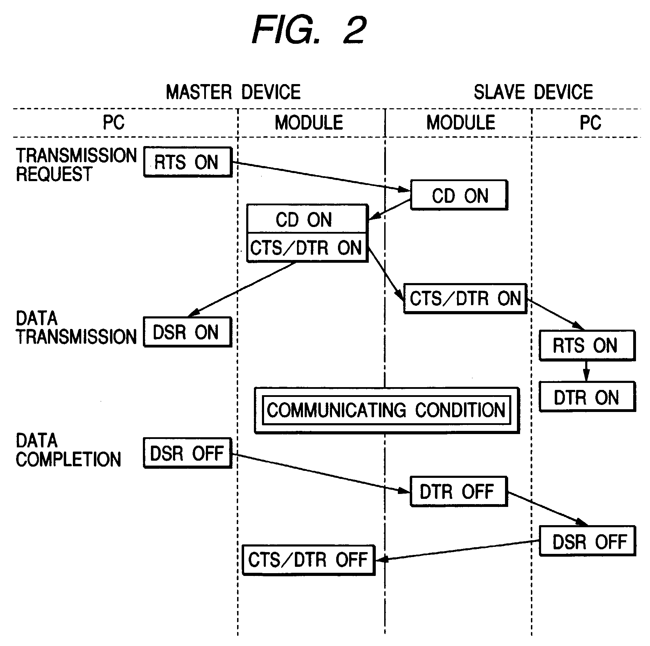

Fig. 2 illustrates a state of the signals exchanged before and after the data communication between one master device and one slave device in the transmitting and receiving equipment of the embodiment. In this figure, the data is transmitted completely to the slave device from the master device.

As shown in Fig. 2, when the master device requests a data communication (transmission) to the slave device, the data processing unit 1 of the master device generates the transmission request (RTS) signal, and transmits to the slave device the transmission coded data with the RTS signal superimposed thereon. When the data module of the slave device receives the RTS signal, the slave device issues the link connection (CD) to the master device to set the communication ready (CTS/DTR) state between the master device and the slave device. In response to the communication ready (CTS/DTR) state, the data processing unit 1 of the slave device generates the transmission request (RTS) signal, next generates the data terminal ready (DTR) signal in the ON state, and transmits to the parent side the transmission coded data with the data terminal ready (DTR) signal in the ON state superimposed thereon. And, in response to the communication ready (CTS/DTR) state, the data processing unit 1 of the master device generates the data set ready (DSR) signal in the ON state, and transmits to the child side the transmission coded data with the data set ready (DSR) signal in the ON state superimposed thereon. When this state is secured, the data communication is started between the master device and the slave device.

While the data communication is executed between the master device and the slave device, when the data to be transmitted from the parent side to the child side becomes null, the data processing unit 1 of the master device turns the DSR signal into the OFF state, and transmits to the child side the transmission coded data with the DSR signal in the OFF state superposed thereon. When the data module of the slave device detects the OFF state of the DSR signal, the slave device turns the DTR signal outputted by the data processing unit 1 thereof into the OFF state. Then, in response to the OFF state of the DTR signal from the slave device, the master device completes the communication ready (CTS/DTR) state, thus setting the completion of the data communication between the master device and the slave device.

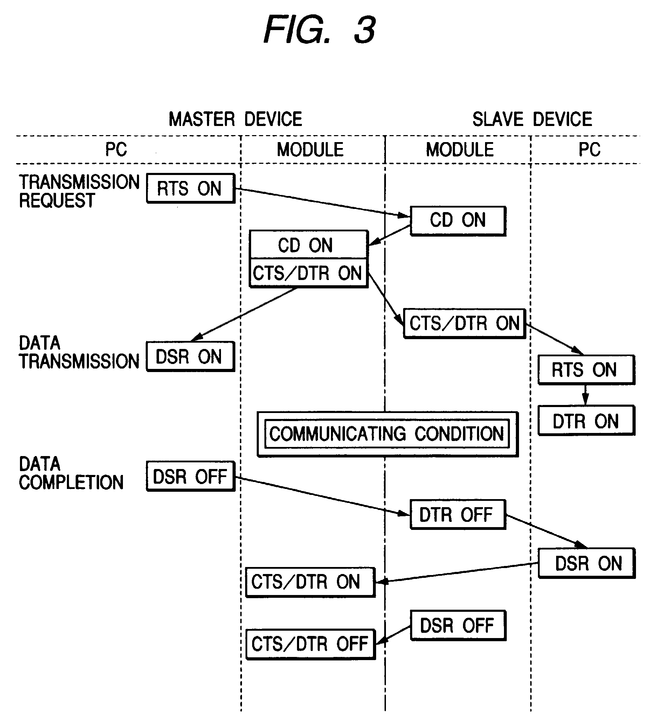

Fig. 3 illustrates another state of the signals exchanged before and after the data communication between the master device and the slave device in the transmitting and receiving equipment of the embodiment, in which the transmission data from the master device to the slave device still remains.

As shown in Fig. 3, the signal exchange at the start of the data communication between the master device and the slave device is the same as that at the start of the data communication between them as shown in Fig. 2; when the master device requests data communication (transmission) to the slave device, the data processing unit 1 of the master device generates the RTS signal, and transmits to the slave device the transmission coded data with the RTS signal superimposed thereon. When the data module of the slave device receives the RTS signal, the slave device issues the link connection to the master device to set the communication ready (CTS/DTR) state between the master device and the slave device. In response to the communication ready (CTS/DTR) state, the data processing unit 1 of the slave device generates the RTS signal, next generates the DTR signal in the ON state, and transmits to the parent side the transmission coded data with the DTR signal in the ON state superimposed thereon. In response to the communication ready (CTS/DTR) state, the data processing unit 1 of the master device generates the DSR signal in the ON state, and transmits to the child side the transmission coded data with the DSR signal in the ON state superimposed thereon. When this state is attained, the data communication (conversation) is started between the master device and the slave device.

While the data communication is executed between the master device and the slave device, to temporarily discontinue the data transmission from the master device to the slave device when a predetermined time has passed, the data processing unit 1 of the master device turns the DSR signal into the OFF state, and transmits to the slave device the transmission coded data with the DSR signal in the OFF state superposed thereon. When the data module of the slave device detects the OFF state of the DSR signal, the slave device turns the DTR signal outputted by the data processing unit 1 thereof into the OFF state. At this moment, detecting that the data transmission is not finished, the processing unit 1 of the slave device maintains the ON state of the DSR signal. In response to the ON state of the DSR signal from the slave device, the master device continues the communication ready (CTS/DTR) state. Thereafter, when the data transmission from the master device to the slave device is finished, in the same manner as the case shown in Fig. 2, the slave device turns the DSR signal outputted by the processing unit 1 thereof into the OFF state, and the master device, in response to the OFF state of the DSR signal, completes the communication ready (CTS/DTR) state, thus setting the completion of the data communication between them.

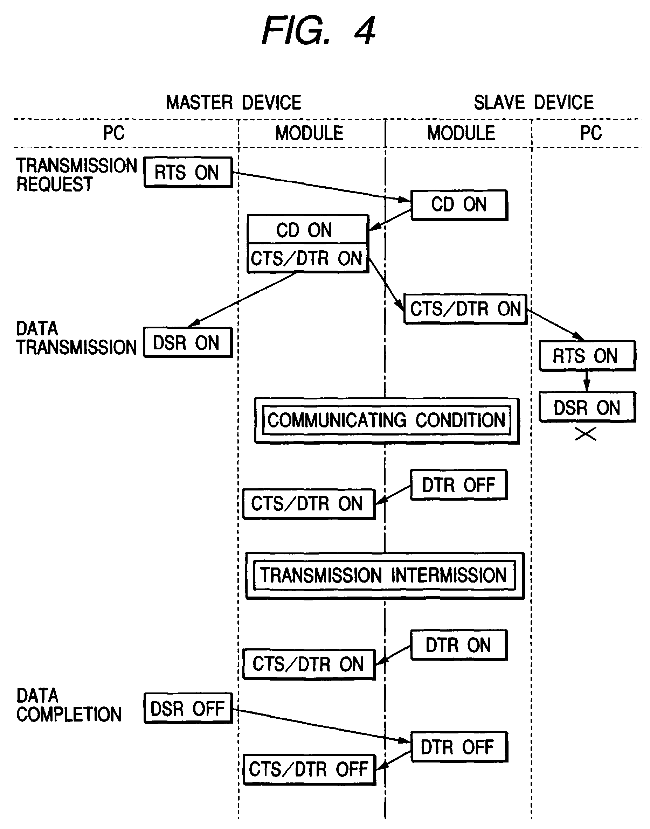

Fig. 4 illustrates another state of the signals exchanged before and after the data communication between the master device and the slave device in the transmitting and receiving equipment of the embodiment, in which the slave device cannot receive the data although the master device is transmitting the data to the slave device.

As shown in Fig. 4, the signal exchange at the start of the data communication between the master device and the slave device is the same as that at the start of the data communication between them as shown in Fig. 2 and Fig. 3; when the master device requests data communication (transmission) to the slave device, the data processing unit 1 of the master device generates the RTS signal, and transmits to the slave device the transmission coded data with the RTS signal superimposed thereon. When the data module of the slave device receives the RTS signal, the slave device issues the link connection to the master device to set the communication ready (CTS/DTR) state between the master device and the slave device. In response to the communication ready (CTS/DTR) state, the data processing unit 1 of the slave device generates the RTS signal, next generates the DTR signal in the ON state, and transmits to the parent side the transmission coded data with the DTR signal in the ON state superimposed thereon. And, in response to the communication ready (CTS/DTR) state, the data processing unit 1 of the master device generates the DSR signal in the ON state, and transmits to the child side the transmission coded data with the DSR signal in the ON state superimposed thereon. When this state is attained, the data communication (conversation) is started between the master device and the slave device.

And, while the master device is transmitting the data to the slave device, when the slave device becomes impossible to receive the data for any reason, such as a trouble on the reception path in the data module of the slave device, or saturation of a reception data buffer in the data module of the slave device, the data module of the slave device turns the DTR signal in the ON state into the OFF state. In response to the OFF state of the DTR signal, the master device completes the transmission enabling (CTS/DTR) state, thus discontinuing the data communication between them.

While such a state continues, the slave device, detecting that the reception trouble of the data disappears, turns the DTR signal in the OFF state into the ON state. Then, in response to the ON state of the DTR signal from the slave device, the master device restores the communication ready (CTS/DTR) state, thus executing the data communication between them.

Thereafter, when the data transmission from the master device to the slave device is finished, in the same manner as the case shown in Fig. 2, the slave device turns the DSR signal outputted by the processing unit 1 thereof into the OFF state, and the master device, in response to the OFF state of the DSR signal, completes the communication ready (CTS/DTR) state, thus setting the completion of the data communication between them.

Thus, according to the transmitting and receiving equipment of this embodiment, while the data communication is executed between the master device and the slave device, when the data to be transmitted becomes null or equipment detects that the other equipment does not normally receive data due to a bad condition of the data communication, the equipment whose transmission data becomes null or the equipment detecting that the data is not normally received turns into the OFF state the DSR signal or the DTR signal being the converted coded data under transmission, thereby setting the completion or discontinuation of the data communication; and therefore, the completion of the data communication can be set swiftly without exceeding the link time.

According to the embodiment having been described, in the data communication executed between the master device and the slave device, the data set ready (DSR) signal or the data terminal ready (DTR) signal being the coded data is designed to be transmitted together with the transmission data, and when the transmission data from a transmitter side becomes null, or when the data communication is in a bad condition for any reason and the transmission data from a transmitter side is detected not to be normally received by a receiver side, the equipment whose transmission data becomes null or the equipment detecting that the reception of data is interrupted turns into the OFF state the DSR signal or the DTR signal being the converted coded data under transmission to thereby set the completion or discontinuation of the data communication; and therefore, the present invention effects swift completion of the data communication without exceeding the link time, after the data communication is completed or interrupted.

## Claims

1. A TDMA/TDD data communication completing system that completes a data communication executed between a master device and a slave device, wherein the master device and the slave device each include a data processing unit that forms transmission serial data and applies data processing to reception serial data, a transmitting and receiving slot control unit that sets time allocation of a transmitting and receiving slot, an encoding unit that encodes the slot-controlled transmission serial data and forms transmission coded data according to the TDMA/TDD system, a transmitting unit that transmits the transmission coded data to partner equipment in the form of an RF signal, a receiving unit that receives the RF signal transmitted by the partner equipment and converts it into a base band signal, a decoding unit that decodes the base band signal into reception coded data, and a control unit that totally controls the units, in which the control units of the master device and the slave device executing the data communication, when converting a data set ready (DSR) signal and a data terminal ready (DTR) signal outputted from the data processing unit into coded data specified by the TDMA/TDD system to transmit it to the partner equipment, and completing the data communication, turn into the OFF state the data set ready (DSR) signal and the data terminal ready (DTR) signal being the converted coded data under transmission.

2. A TDMA/TDD data communication completing system according to Claim 1, wherein the data set ready (DSR) signal and the data terminal ready (DTR) signal are set in the A field of the slot 1 data in the DECT system.
